# FASCICULE DE BREVET EUROPEEN

(11) **EP 2 223 824 B1**
(45) Date de publication et mention de la délivrance du brevet: **29.08.2012**
(21) Numéro de dépôt: 09405197.6
(22) Date de dépôt: 12.11.2009
(51) Int. Cl.: B60P 3/32, B60P 3/10, B60F 3/00, B63B 1/14

(54) **Véhicule amphibie avec un espace habitable**
Amphibisches Fahrzeug mit Wohnraum
Amphibian vehicle with living accomodation

(30) Priorité: 26.02.2009 CH 285092009; 19.05.2009 CH 784092009
(43) Date de publication de la demande: 01.09.2010
(73) Titulaire: Schreyer, Philippe, 2016 Cortaillod (CH)
(72) Inventeur: Schreyer, Philippe, 2016 Cortaillod (CH)

(56) Documents cités:
- EP-A1- 0 045 293
- EP-A1- 0 109 133
- FR-A1- 2 213 855
- GB-A- 1 522 310
- US-A- 2 119 775
- US-A- 3 308 782
- US-A- 5 228 404
- US-A- 5 904 111

## Description

### Domaine technique

La présente invention appartient au domaine des véhicules habitables, capables de se déplacer sur terre et sur l'eau. Plus particulièrement, le véhicule appartient à la catégorie de ceux qui comprennent au moins deux flotteurs sensiblement parallèles l'un à l'autre.

### Technique antérieure

Il existe de nombreux exemples de bateaux à deux flotteurs ou plus, et qui sont équipés de dispositifs à roues leur permettant de se déplacer sur terre.

Ainsi, le brevet US 6,840,825 Messano propose un bateau à coque centrale entourée de deux flotteurs latéraux ; chaque flotteur est équipé de roues et peut pivoter sur son axe longitudinal. Les roues sont placées sur la face supérieure du flotteur et dans un plan horizontal lorsque le bateau navigue. Pour placer ses roues dans une position de roulage sur le sol, il suffit de faire pivoter le flotteur sur son axe longitudinal et les roues se placent verticalement de façon à toucher le sol.

Le brevet EP 0109133 Provinciale Stichting montre une camionnette habitable (« camper ») équipée de deux flotteurs latéraux qui s'abaissent lorsque le véhicule doit naviguer.

Dans le premier cas, le bateau est classique, et deux flotteurs lui sont accolés, sans que l'habitabilité en soit améliorée ou que la construction soit simplifiée.

Dans le second cas, il s'agit simplement d'une camionnette habitable classique, à laquelle l'adjonction de deux flotteurs permet de naviguer occasionnellement et en eau calme.

Ni dans un cas, ni dans l'autre, le volume des flotteurs n'est utilisé à d'autre fin que la flottaison. Il y a là une perte de volume utilisable.

Par ailleurs, dans les deux cas, les deux flotteurs sont attachés de manière rigide, de sorte qu'ils restent dans la même position l'un par rapport à l'autre, même si l'un des flotteurs rencontre un creux au moment où l'autre flotteur rencontre la crête d'une vague. L'embarcation subit alors de fortes contraintes.

De même, lorsqu'un véhicule se déplace sur un terrain inégal, formé par exemple de dunes, une ou deux de ses roues peuvent perdre le contact avec le sol, même malgré un débattement de la suspension.

La présente invention vise à fournir une habitation mobile qui ne présente pas ces défauts.

### Exposé de l'invention

L'invention est définie dans les revendications.

### Description sommaire des dessins

La figure 1 est une vue de dessus d'un véhicule habitable selon l'invention.

La figure 2 est une vue de face d'un véhicule selon la figure 1, sur le sol, avec les roues abaissées, la dérive et le gouvernail relevés, le flotteur de droite étant présenté selon une coupe A-A.

La figure 3 est une vue semblable à celle de la figure 2, le véhicule étant cependant dans l'eau, les roues relevées, la dérive et le gouvernail abaissés.

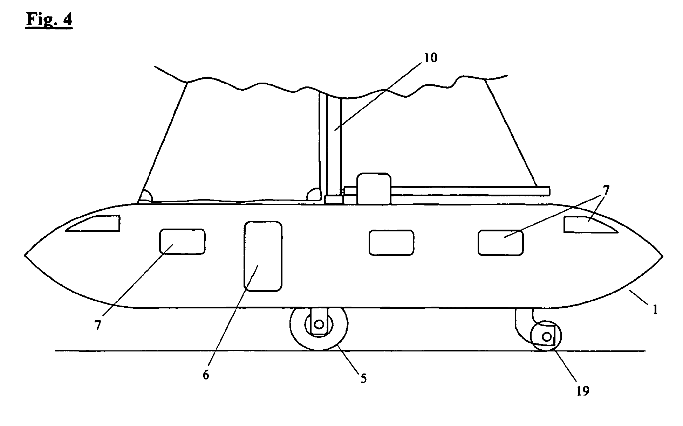

La figure 4 est une vue latérale d'un véhicule tel que montré dans les figures précédentes, et notamment à la figure 2, le véhicule étant placé sur le sol.

Le mât et les voiles ne sont montrés sur les dessins que partiellement.

### Meilleure manière de réaliser l'invention

Le véhicule habitable amphibie selon l'invention comprend deux flotteurs 1 sensiblement parallèles. Chaque flotteur est constitué d'un corps central 4 cylindrique, ce cylindre étant de préférence un cylindre de révolution. De tels cylindres sont aisément disponibles dans l'industrie et peu onéreux. Il est possible d'en trouver de diamètres divers, et de diverses matières, qu'il s'agisse d'acier inoxydable, d'aluminium, de fibres de verre ou de carbone.

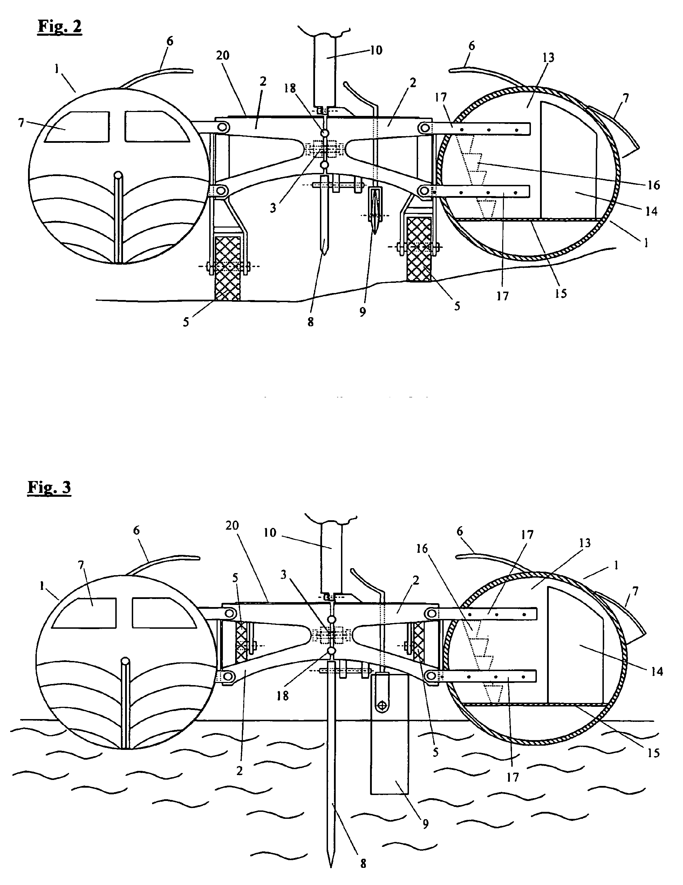

Le corps central est fermé à chaque bout par une partie en forme d'ogive. Toutefois, dans la forme d'exécution représentée aux figures 2 et 3, la partie inférieure de l'ogive est formée en étrave. Il s'agit là d'une forme d'exécution parmi d'autres, qui peut présenter un avantage hydrodynamique, cas échéant. La forme en ogive permet de passer la vague aisément, la forme arrondie laissant la vague glisser sur sa surface inférieure sans rencontrer de grande résistance. Le véhicule peut ainsi sortir de la mer, ou y entrer, sans piquer dans la vague. Afin d'augmenter la hauteur de la vague que peut affronter le flotteur sans piquer, il est possible de placer la pointe de l'ogive plus haut, en donnant à l'ogive une forme asymétrique. Afin d'augmenter la rigidité du flotteur, et pour créer des compartiments ou des chambres différents, des parois transversales 13 sont insérées. Des portes 14 sont ménagées dans ces parois. Les parois intérieures peuvent être faites, par exemple, de bois contreplaqué. Pour assurer l'habitabilité, un plancher 15, qui peut également être en bois, est aussi installé. Une porte extérieure 6 est ménagée en direction de l'autre cylindre. Un escalier 16 permet de passer du plancher au seuil de la porte extérieure et d'accéder au pont 20. Celui-ci est constitué de deux plaques, dont chacune est fixée sur un demi-châssis. D'autres portes extérieures 6 permettent de sortir vers le sol. Des fenêtres 7 sont ménagées.

Les flotteurs sont fixés l'un à l'autre part un châssis formé de deux demi-châssis 2. Les deux demi-châssis peuvent être constitués de pièces découpées par exemple au laser, dans toute matière, par exemple de l'acier inoxydable, et soudées. Chaque flotteur est fixé à son demi-châssis par des plaques 17, par exemple en acier inoxydable, qui sont placées de part et d'autre d'une ou de plusieurs parois 13, et assemblées entre elles et avec la paroi au moyen de boulons.

Les deux demi-châssis 2 sont fixés l'un à l'autre au moyen d'une articulation 3. Cette articulation comprend un axe horizontal transversal à la direction des deux flotteurs.

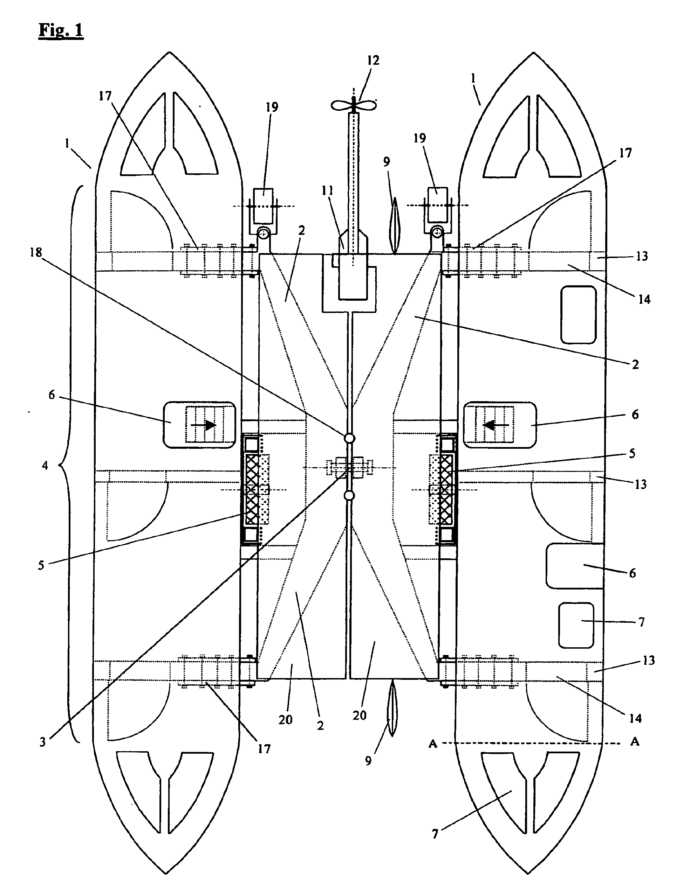

Elle permet à chaque demi-châssis de tourner par rapport à l'autre autour de l'axe. Il est possible de trouver de telles articulations sur le marché, par exemple chez les fabricants de tourelles de grues. Comme le montrent les figures 1 à 3, l'articulation comprend des billes 18 réparties autour de l'axe de l'articulation 3 et qui assurent une répartition assez large de l'effort sur les parois des deux demi-châssis. La possibilité pour un flotteur de tourner verticalement par rapport à l'autre permet à l'un des deux flotteurs d'aborder la crête d'une vague pendant que l'autre flotteur descend dans un creux, sans que l'un des deux flotteurs soit amené à piquer dans l'eau. L'ensemble formé par les flotteurs suit ainsi la houle en épousant le mouvement des vagues. De même, les roues dont est équipé le véhicule gardent le contact avec le sol grâce à cette rotation verticale de chaque demi-châssis par rapport à l'autre. Les flotteurs ont de préférence une section ronde dans la partie centrale 4, comme on l'a vu plus haut. Outre, la simplicité, cette forme a l'avantage de donner aux flotteurs une ligne de flottaison plus basse que celle que présente un flotteur de même volume mais dont la section serait par exemple en V. En d'autres termes, le tirant d'eau apporté par cette forme est beaucoup plus faible et permet de remonter les rivières assez loin ou d'arriver sur des plages très près du bord.

Bien entendu, il est également possible de donner aux flotteurs cylindriques une section autre que ronde, par exemple ovale, ce qui implique de donner la forme correspondante aux parois transversales 13.

Deux roues motrices 5 sont montées sous le châssis, chaque roue étant fixée à un demi-châssis contre un flotteur. Ces roues sont fixées aux demi-châssis par l'intermédiaire d'un dispositif, non représenté ici, qui permet de les remonter pour la navigation et de les abaisser pour rouler. Le dispositif d'abaissement et de rétraction est un système classique, par exemple hydraulique ou hydroélectrique. De tels systèmes sont disponibles sur le marché, par exemple avec des moteurs de 12 Volts actionnant une pompe, avec des vérins, des rails et des glissières. Il est également possible de prévoir un dispositif permettant de faire monter ou descendre les roues manuellement.

La motorisation des roues destinée à donner son mouvement au véhicule est également classique et peut consister en un dispositif électrique ou hydroélectrique.

Dans la forme d'exécution représentée ici, le véhicule n'est équipé que de deux roues motrices 5 qui soutiennent l'essentiel du poids, du fait qu'elles sont placées très près du centre de gravité. Deux roues arrière 19 pivotantes, non motorisées, sont aussi fixées au châssis. Elles peuvent aussi être rétractables.

Dans la forme d'exécution représentée ici, les roues motrices ne sont pas pivotantes. Les variations de direction sont provoquées par des différences de la vitesse de rotation d'une roue par rapport à l'autre, que ces différences soient commandées par une augmentation de la puissance donnée au moteur d'une roue ou par la diminution de cette puissance, ou encore par le freinage de l'une des roues. Les roues pivotantes arrière suivent simplement les changements de direction en pivotant.

Les roues, aussi bien motrices que non motrices, peuvent être en plus grand nombre. Elles peuvent aussi être remplacées par des chenilles.

Le véhicule terrestre et marin est pourvu d'une dérive 8 et de deux gouvernails 9. A l'inverse des roues ou chenilles, la dérive et les gouvernails peuvent être relevés pour les trajets sur terre et abaissés pour la navigation. A cette fin, la dérive comme les gouvernails sont montés sur un axe qui leur permet de pivoter.

Les gouvernails sont ici au nombre de deux, l'un à l'avant et l'autre à l'arrière de l'un des demi-châssis. Un mécanisme simple et classique, non représenté ici, permet de donner à l'un des gouvernails une direction inverse de celle de l'autre gouvernail. Cela autorise des virages serrés. Il est aussi possible de prévoir plusieurs dérives, et un seul gouvernail, ou des gouvernails en plus grand nombre, ainsi que des gouvernails qui peuvent être orientés dans la même direction plutôt que dans des directions divergentes.

Un moteur 11 actionnant une hélice 12 est fixé au châssis. L'hélice peut être abaissée dans l'eau au moyen d'un dispositif non représenté ici et bien connu.

Un mât 10 est aussi fixé au centre du châssis, sur l'un des deux demi-châssis.

Le mât, la dérive, les gouvernails, le moteur et l'hélice sont tous fixés au même demi-châssis. Le mât est placé exactement au-dessus du centre de l'articulation 3. De la sorte, il est possible de l'arrimer au châssis sur lequel son pied n'est pas fixé, au moyen d'un câble dont le point d'attache se trouve dans le prolongement de l'axe de l'articulation 3, ce qui évite le risque de tensions et détentes successives du câble en fonction de la variation de la position relative des flotteurs induite par les vagues.

### Possibilités d'application industrielle

L'invention est utilisable dans la fabrication de véhicules habitables utilisables sur terre et sur l'eau.

## Revendications

1. Véhicule habitable utilisable sur terre et sur l'eau , comprenant au moins deux flotteurs (1) sensiblement parallèles l'un à l'autre, **caractérisé en ce que** chacun des deux flotteurs est fixé à un demi-châssis (2), les deux demi-châssis étant placés entre les deux flotteurs et étant fixés l'un à l'autre par une articulation (3) qui permet à un demi-châssis de tourner par rapport à l'autre autour d'un axe horizontal transversal à la direction de la longueur des deux flotteurs.

2. Véhicule selon la revendication 1, **caractérisé en ce que** chacun des deux flotteurs est constitué d'un corps central (4) cylindrique.

3. Véhicule selon la revendication2, **caractérisé en ce que** le corps central (4) de chacun des deux flotteurs a la forme d'un cylindre de révolution.

4. Véhicule selon l'une des revendications 2 à 3, **caractérisé en ce que** le corps central (4) d'au moins un flotteur est fermé à au moins un bout par une partie en forme d'ogive symétrique ou asymétrique.

5. Véhicule selon l'une des revendications 1 à 4, **caractérisé en ce qu'**il comprend au moins deux roues motrices ou chenilles (5) dont chacune peut être abaissée au niveau du sol ou relevée.

6. Véhicule selon la revendication 5, **caractérisé en ce que** les changements de direction sur terre sont commandés par une variation de la force de traction d'au moins une roue motrice ou chenille (5) par rapport à la force de traction d'au moins une autre roue ou chenille (5).

7. Véhicule selon l'une des revendications 5 ou 6, **caractérisé en ce que** les roues motrices ou chenilles (5) sont en nombre pair et fixées en nombre égal à chacun des deux demi-châssis.

8. Véhicule selon l'une des revendications 1 à 7, **caractérisé en ce que** au moins l'un des deux flotteurs (1) est habitable et comprend au moins une porte extérieure (6) et une fenêtre (7).

9. Véhicule selon l'une des revendications 1 à 8, **caractérisé en ce qu'**il comprend au moins une dérive (8) et un gouvernail (9) qui peuvent être remontés au-dessus du sol quand le véhicule est sur terre et abaissés dans l'eau quand il est dans l'eau.

10. Véhicule selon l'une des revendications 1 à 9, **caractérisé en ce qu'**il comprend au moins un mât (10) placé sur l'un des deux demi-châssis.

11. Véhicule selon l'une des revendications 1 à 10, **caractérisé en ce qu'**il est pourvu d'au moins un moteur (11) relié à au moins une hélice (12).

12. Véhicule selon la revendication 11, **caractérisé en ce que** la dérive, le gouvernail, le mât, le moteur et l'hélice sont fixés sur le même demi-châssis.

## Claims

1. Amphibian vehicle which can operate on land and water and has at least two floats (1) that are notably parallel to each other and which is **characterized in that** each of the two floats is fixed to a half-frame (2), the two half-frames being placed between the two floats and being fixed to each other by an articulation (3) that allows a half-frame to rotate relative to the other about a horizontal axis transverse to the direction of the length of the two floats.

2. Vehicle according to claim 1, **characterized in that** each of the two floats is constituted by a cylindrical central body (4).

3. Vehicle according to claim 2, **characterized in that** the central body (4) of each of the two floats is in the form of a rotating cylinder.

4. Vehicle according to one of claims 2 to 3, **characterized in that** the central body (4) of at least one float is closed at one end at least by a symmetrical or asymmetrical part with an ogival shaped point.

5. Vehicle according to one of claims 1 to 4, **characterized in that** it comprises at least two drive wheels or tracks (5) each of which can be lowered or raised from ground level.

6. Vehicle according to claim 5, **characterized in that** changes of direction on land are controlled by a variation of the tensile force of at least one drive wheel or track (5) relative to the tensile force of at least one other wheel or track (5).

7. Vehicle according to one of claims 5 or 6, **characterized in that** the drive wheels or tracks (5) are even in number and fixed in equal number on each of the two half-frames.

8. Vehicle according to one of claims 1 to 7, **characterized in that** at least one of the two floats (1) is habitable and comprises at least one exterior door (6) and one window (7).

9. Vehicle according to one of claims 1 to 8, **characterized in that** it comprises at least one stabilizer (8) and a rudder (9) that can be raised above the ground when the vehicle is on land and lowered when the vehicle is in water.

10. Vehicle according to one of claims 1 to 9, **characterized in that** it comprises at least one mast (10) placed on one of the two half-frames.

11. Vehicle according to one of claims 1 to 10, **characterized in that** it is provided with at least one motor (11) connected to at least one propeller (12).

12. Vehicle according to claim 11, **characterized in that** the drift, rudder, mast, motor and propeller are fixed on the same half-frame.

## Patentansprüche

1. Zu Lande und zu Wasser einsetzbares Wohnfahrzeug, bestehend aus mindestens zwei deutlich parallel zueinander liegenden Schwimmern (1), **dadurch gekennzeichnet, dass** jeder der beiden Schwimmer an einem Halbrahmen (2) befestigt ist, wobei die beiden Halbrahmen zwischen den beiden Schwimmern ange ordnet und mit einem Gelenk (3) miteinander befestigt sind, welches es einem der Halbrahmen ermöglicht, gegenüber dem andem um eine horizontale Achse quer zur Längsrichtung der beiden Schwimmer zu drehen.

2. Fahrzeug nach dem Anspruch 1, **dadurch gekennzeichnet, dass** jeder der beiden Schwimmer aus einem zylindrischen Mittelkörper (4) besteht.

3. Fahrzeug nach dem Anspruch 2, **dadurch gekennzeichnet, dass** der Mittelkörper (4) jedes der beiden Schwimmer die Form eines Drehzylinders hat.

4. Fahrzeug nach einem der Ansprüche 2 bis 3, **dadurch gekennzeichnet, dass** der Mittelkörper (4) mindestens eines Schwimmers an mindestens einem Ende durch einen Teil in symmetrischer oder assymetrischer Spitzbogenform verschlossen ist.

5. Fahrzeug nach einem der Ansprüche 1 bis 4, **dadurch gekennzeichnet, dass** es mindestens zwei Treibräder oder Kette (5) aufweist, von denen jedes auf Bodenhöhe gesenkt oder angehoben werden kann.

6. Fahrzeug nach dem Anspruch 5, **dadurch gekennzeichnet, dass** die Richtungsänderungen zu Lande durch eine Änderung der Zugkraft mindestens eines Treibrades oder Kette (5) gegenüber der Zugkraft mindestens eines anderen Rades oder Kette (5) gesteuert werden.

7. Fahrzeug nach einem der Ansprüche 5 oder 6, **dadurch gekennzeichnet, dass** die Treibräder oder Ketten (5) in gerader Zahl sind und in gleicher Anzahl an jedem der beiden Halbrahmen befestigt sind.

8. Fahrzeug nach einem der Ansprüche 1 bis 7, **dadurch gekennzeichnet, dass** mindestens einer der beiden Schwimmer (1) bewohnbar ist und mindestens eine Aussentür (6) und ein Fenster (7) aufweist.

9. Fahrzeug nach einem der Ansprüche 1 bis 8, **dadurch gekennzeichnet, dass** es mindestens ein Schwert (8) und ein Ruder (9) enthält, die über den Boden angehoben werden können, wenn das Fahrzeug auf der Erde ist und ins Wasser gesenkt werden können, wenn es im Wasser ist.

10. Fahrzeug nach einem der Ansprüche 1 bis 9, **dadurch gekennzeichnet, dass** es mindestens einen Mast (10) aufweist, der an einem der beiden Halbrahmen angeordnet ist.

11. Fahrzeug nach einem der Ansprüche 1 bis 10, **dadurch gekennzeichnet, dass** es mit mindestens einem Motor (11) versehen ist, der mit mindestens einer Schiffsschraube (12) verbunden ist.

12. Fahrzeug nach dem Anspruch 11, **dadurch gekennzeichnet, dass** das Schwert, das Ruder, der Mast, der Motor und die Schiffsschraube am gleichen Halbrahmen befestigt sind.
